# EUROPEAN PATENT APPLICATION

(11) **EP 2 383 304 A1**
(43) Date of publication of application: **02.11.2011**
(21) Application number: 10161209.1
(22) Date of filing: 27.04.2010
(51) Int. Cl.: C08G 18/10, C08G 18/28, C08G 18/36, C08G 18/66, C08G 18/76

(54) **Composition for one-component polyurethane foams**

(71) Applicant: de Schrijver, Aster, 9831 Deurle (BE)
(72) Inventor: De Schrijver, Aster, 9831, Deurle (BE); Bordado, João Moura, 1049-001, Lisboa (PT); Georgiev, Georgiev, Georgi, 1326, Sofia (BG)
(74) Representative: BiiP cvba

(57) **Abstract**

The present invention concerns a one component foam (OCF) composition comprising a very low amount of free monomeric MDI. The present OCF composition may be obtained without any free MDI removal step, and without the addition of extra solvent to compensate for the substantially lower amount of free MDI, compared with traditional compositions. The present composition comprises a source of free NCO of functionality of at least 2.6, at least a specific mono-functional alcohol, a bi-functional alcohol, and a tri-or higher functional alcohol, all polyols being characterized by a rather low molecular weight. The OCF composition of the present invention is suitable for being dispensed from a pressurized can with a blowing agent.

## Description

### Technical Field

The present invention relates to a pressurized one component foam composition reacting with moisture to produce a polyurethane foam, said composition comprising a very low amount of free monomeric diphenyl methane diisocyanate (MDI), preferably, lower than 1 wt.% free monomeric MDI.

### Background for the invention

Polyurethane foams are produced by the reaction of a polyol and a polyisocyanate, in the presence of a catalyst, a blowing agent, and additives such as a flame retardant, a surfactant, pigments, dye, fillers, or other components. By varying the type and amount of reactants and optional additives, a wide variety of foams can be produced having different densities, rigidity, and structures.

The metering and mixing of two components (polyol and polyisocyanate) to produce a polyurethane foam (so called two components foams or TCF) being unpractical in many applications, so called one component foams (or OCF) were developed, wherein a prepolymer containing isocyanate groups is filled into a pressure vessel together with one or more blowing agents and conventional additives. A polyurethane foam can then be produced by simply spraying the content of the pressure vessel, which will form a cellular structure under the action of the blowing agent and cure under the action of the ambient moisture. OCF's are of course much easier to use then TCF's since they require no metering, no mixing of the foam components and are currently used in e.g., the building sector, for example, for filling, insulating or fastening doors, windows and the like, and in the automotive industry, for vibration and sound dampening.

The literature disclosing one component foam compositions is abundant and the following patents can be cited as example only: EP480342; EP1674492; DE102008034272; FR2396035; GB962951; US3830760; US4258140; US4508853; US4742087; US5817860; US5075407; US5786402;US6410609; US200727051; WO02090410; WO02079291 ; US6090307; US5631319; US2007/0197672; WO00/04069; WO02/090410; WO2005/007721; W02007/ 100502.

A typical polyisocyanate component present in most OCF compositions is diphenylmethane diisocyanate (MDI) or a mixture of diphenylmethane diisocyanate and poly-(phenylene methane poly-isocyanate), often referred to as crude MDI, which provides a convenient source of free NCO-groups to react with the polyols. The polyols used are usually a mixture of bi-, tri-, and sometimes higher functional polyols of rather high molecular weight, which react with MDI to form NCO-containing prepolymers. Each prepolymeric chain contains a limited number of free NCO-groups, of the order of 2 or 3 per chain, yielding a free NCO-group content of about 6-7% for rigid foams, and lower for more flexible chains. It is well established, however, that the optimal content of free NCO-groups to obtain a satisfactory crosslinking density is around 14.5% or more. In order to reach the required proportion of free NCO-groups, most compositions comprise an excess amount of free MDI. The excess content of MDI in the mixture is further encouraged by the fact that MDI is a good solvent for NCO-containing prepolymers, which need be dissolved lest the viscosity of the mixture would be too high to allow its spraying out of the can. Furthermore, MDI shows excellent compatibility with the blowing agents (or propellent) generally used.

Free monomeric MDI, however, is highly toxic and the great ease of use associated with OCF formulations is severely outweighed by the care the end-user must show to protect itself from breathing free MDI present in the foaming mixture as it is being dispensed. This is rendered even more critical by the fact that OCF's are often used to fill in cavities which are poorly ventilated and thus exposing the user to great risks.

To solve this problem, DEI 0311607 proposes to react polyols with a stoechiometric excess of a monomer-free polyisocyanate and then to remove the excess di-isocyanate. Although quite effective, this solution requires an extra step for removing the excess di-isocyanate and an additional thinning agent, methyl dimethyl ether, must be added to reduce the viscosity of the mixture.

Similarly, EPI 51 8874 discloses an OCF composition having a low monomer content, which is obtained from a specific mixture of poly-(phenylene methane poly-isocyanates) (PMDI), and comprising removal of the monomeric isocyanate by distillation.

US2009253819 discloses an OCF composition having a low content of monomeric MDI obtained by reacting a specific mixture of MDI and polymeric MDI having an average functionality of from 2.2 to 5.2. But the preparation of the specific mixture requires the extraction of mixtures of diisocyanates and polyisocyanates having an average functionality of greater than 2 and then freeing them from diisocyanates by distillation, which basically does not remove, but simply shifts the distillation step upstream of the process, compared with the previous disclosures.

WO 2005/007721 discloses an OCF composition having a low content of free MDI, obtained by the use of mixtures of NCO-terminated prepolymers obtained by reaction of polyols and diphenylmethane diisocyanate in stoechiometric excess which had been freed from monomers, and a number of polymeric MDI and diluents. Disadvantageous here are the extremely high viscosities of the starting materials in the absence of diluting monomeric MDI.

It can be seen from this review of the prior art, that it remains a need in the art for a polyurethane OCF composition having a low content of free monomeric MDI, which preparation does not require any monomeric MDI removal step nor the use of additional solvents to compensate for the low amount of monomeric MDI.

These and other objects of this invention will be evident when viewed in light of the drawings, detailed description, and appended claims.

### Summary of the invention

The present invention is defined in the appended independent claims. Preferred embodiments are defined in the dependent claims.

In particular, the present invention concerns a one component isocyanate prepolymer mixture for the production of polyurethane foam said mixture having a content of free monomeric diphenylmethane diisocyanate (MDI) of not more than 4 wt%, with respect to the total weight of the mixture, and being obtained by mixing in the absence of moisture at least;
(a) an isocyanate component, or mixture of components, having a functionality of at least 2.6, preferably comprising MDI
(b) a mono-functional alcohol having a molecular weight of at least about 130 g / mol, preferably having a branched paraffinic structure for controlling the flexibility of the final foam ;
(c) a bi-functional alcohol having a molecular weight not greater than about 100 g / mol for controlling the final foam rigidity;
(d) a tri- or higher functional polyol of molecular weight of not more than 2000, preferably, not more than 1000, selected between
   (i) an ester with three or more esterified hydroxy functional fatty acid groups, wherein the closest hydroxyl group on each hydrocarbon chain is separated from the respective ester group by at least seven carbons; and
   (ii) a hydroxy functional polyether oligomer having an overall hydroxyl functionality comprised between 3 and 8;
(e) a catalyst and additives; and
(f) a blowing agent.

The composition of the present invention makes use of polyols having shorter chains than found in traditional compositions, which make abundantly use of large molecules like polypropylene glycol (PPG) and the like. The use of shorter polyol chains yields the double advantage of increasing the concentration of free NCO-groups attached to a prepolymer, while maintaining the prepolymer mixture viscosity low. The required flexibility of the final foam skeleton is controlled by the addition of a mono-functional alcohol.

Lower amounts of free monomeric MDI of not more than 3 wt%, with respect to the total weight, preferably not more than 2 wt.%, more preferably not more than 1 wt% can be achieved by a proper selection of the isocyanates used. In particular, the isocyanate component or mixture of components may comprise one or more of the following components: crude MDI, crude toluene diisocyanate (crude TDI), poly-phenyl methane poly-isocyanate, (PMDI), isocyanate end-capped TDI prepolymer, preferably tri-functional, and any mixture thereof having a functionality of at least 2.6. In a particularly preferred embodiment, the isocyanates comprise an isocyanate end-capped TDI prepolymer, which allows particularly low free monomeric MDI contents to be achieved.

A preferred composition comprises:
(a) between 15 and 25 wt% of MDI or PMDI prepolymers and 50 to 75 wt% isocyanate-end capped TDI
(b) between 6 and 15 wt% of a mono-functional alcohol, preferably 2-ethyl-hexanol, more preferably between 8 and 12 wt%, most preferably between 9.5 and 10.5 wt%;
(c) between 1 and 1 5 wt% of a bi-functional alcohol, preferably ethylene glycol, more preferably between 2 and 8 wt%;
(d) between 8 and 20 wt% of castor oil, preferably between 10 and 15 wt%, more preferably between 10.5 and 12.0 wt%
all weight fractions being calculated with respect to the total weight of the mixture.

The present invention also concerns a method for preparing a one component isocyanate prepolymer mixture for the production of polyurethane, comprising the following steps:
(A) load in a closed, hermetic vessel protected from moisture and mix at a temperature comprised between 45 and 65°C, preferably between 50 and 60°C appropriate amounts of a mixture comprising:
   (a) An isocyanate component, or mixture of components, having a functionality of at least 2.6, preferably comprising MDI
   (b) A mono-functional alcohol having a molecular weight of at least about 130 g / mol, preferably having a branched paraffinic structure for controlling the flexibility of the final foam ;
   (c) A bi-functional alcohol having a molecular weight not greater than about 100 g / mol for controlling the final foam rigidity;
   (d) a tri- or higher functional polyol of molecular weight of not more than 2000, preferably, not more than 1000, selected between
      (i) an ester with three or more esterified hydroxy functional fatty acid groups, wherein the closest hydroxyl group on each hydrocarbon chain is separated from the respective ester group by at least seven carbons; and
      (ii) a hydroxy functional polyether oligomer having an overall hydroxy functionality comprised between 3 and 8;
   (e) a catalyst and additives;
(B) Optionally transfer the mixture thus obtained into a dispensing container, shielding the blend from moisture; and
(C) Hermetically close the vessel or dispensing container containing the mixture and introduce therein a blowing agent under pressure through a valve.

### Brief description of the Figures

For a fuller understanding of the nature of the present invention, reference is made to the following detailed description taken in conjunction with the accompanying drawings in which:
Figure 1: schematically shows the three main stages occurring during foam formation upon contacting the OCF mixture with ambient moisture.
Figure 2: schematically shows how the monofunctional alcohol reacts with PMDI.
Figure 3 shows embodiments of NCO prepolymers obtained by reaction of NCO-groups with (a) mono-functional, (b) bi-functional, and (c) tri-functional alcohols.

### Detailed description of the invention

An important issue for OCF compositions is the viscosity of the prepolymerized mixture in the pressurized vessel. For this reason, as reviewed in the background art, free monomeric MDI is often used in relatively large quantities, because it is both a convenient source of free NCO-groups and a good solvent for the free NCO- containing prepolymers. Reducing the amount of free monomeric MDI by simply replacing it by an alternative polyisocyanate could therefore possibly provide an alternative source of free NCO-groups, but would yield a mixture having a viscosity too high to be dispensed from a pressurized vessel, such as an aerosol can. This explains why, the solutions proposed in the prior art to reduce the amount of free monomeric MDI involve using an excess MDI, followed by removing the remaining free monomeric MDI, e.g., by distillation, and introduction of another solvent, e.g., methyl dimethyl ether, to compensate for the removed MDI.

The present invention distinguishes itself completely from this complex route to reduce the amount of free monomeric MDI present in the OCF mixture to less than 4 wt.%, preferably less than 3.0 wt.%, more preferably less than 2.0 wt.%, most preferably less than 1 wt.%. Indeed, according to the present invention, no free monomeric MDI removal step is required, and the absence of free monomeric MDI needs not be compensated by an additional amount of an alternative solvent. All these objects were rendered possible by mixing a polyisocyanate of average functionality greater than 2.6 with a combination of specific monofunctional, di-functional, and tri- or higher functional alcohols, all polyols being characterized by a rather low molecular weight, in contrast with the prior art compostions which usually comprise high molecular weight polyols, like polypropylene glycol (PPG). It is preferred in the present invention, that the mixture comprises no high molecular weight polymers like PPG. In order to better understand the present invention, the polymerization mechanism of a one component polyurethane foam is reviewed briefly.

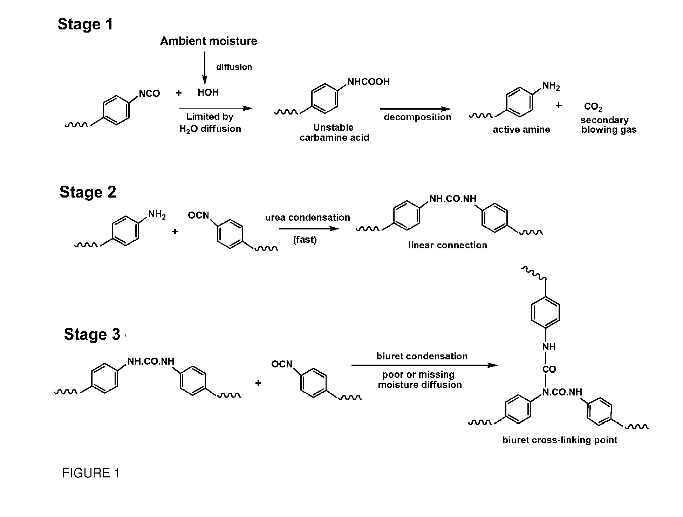

Figure 1 shows the three main reaction stages responsible for the formation of a polyurethane foam upon contacting an OCF composition with moisture:
- stage 1: Formation of active NH₂-groups able to condensate with NCO-groups and releasing secondary blowing gas, CO₂.
- stage 2: Formation of urea by condensation between NH₂-groups, formed in Stage 1, and free NCO groups:
- stage 3: Biuret condensation between urea group, formed in Stage 2, and free NCO groups.

### Stage 1:

Upon dispensing an OCF composition in the ambient, the free NCO groups of the prepolymers react in a first stage with ambient moisture to form unstable carbamine acid, which readily decomposes into an active amine and gaseous CO₂. At an initial stage, as free NCO is readily contacted by moisture from ambient, this reaction is very fast, but as the reaction progresses, the reaction rate decreases as it becomes controlled by the diffusion of the moisture through the forming foam to reach the remaining free NCO-groups. One way of controlling the rate of stage 1 reaction is to control the hydrophilicity / hydrophobicity of the mixture, the reaction rate increasing with higher hydrophilicity. For example, for a given content of about 1 5% of free NCO groups attached to a polyether polyol, the hydrophilicity / hydrophobicity of the prepolymer can be increased by increasing / decreasing the number of alkoxy-groups in the polyether chains. Of course, removing alkoxy groups altogether, such as by using paraffinic chains, will confer a quite hydrophobic character to the mixture.

### Stage 2:

In a second stage, urea is formed by condensation between NH2-groups, formed in Stage 1, and unreacted NCO groups. Here again, the reaction is very fast if sufficient NH2-groups can readily contact free NCO-groups but, on the one hand, it is strongly dependent on the NH2-groups formation rate in stage 1 and, on the other hand, it becomes diffusion controlled as the viscosity of the froth increases. With di-isocyanates, like MDI, this reaction yields linear structures, but with tri- and higher functionality isocyanates it yields a three-dimensional cross-linked urethane net. Since a certain amount of di-isocyanates is likely to be present in most OCF formulations, yielding linear structures, this type of crosslinking reactions can be defined as yielding a soft crosslink, and becomes harder as the fraction of di-isocyanate present in the polyisocyanate decreases.

### Stage 3:

The third stage involves biuret condensation between urea groups formed in the second stage and free NCO-groups, yielding so-called biuret type cross-links. At the early stages of the reaction, and if moisture can readily access to free NCO-groups, biuret condensation rate is insignificant compared with stages 1 and 2 but, as the viscosity of the froth increases, the reaction rates of stages 1 and 2 decrease and biuret reactions may become predominant. Because biuret condensation becomes relevant only at a later stage, when a three-dimensional net is already formed to varying extents and the viscosity has grown considerably, the reaction rate is diffusion controlled, and only the most mobile and shortest chains containing free NCO-groups, in particular free monomeric MDI, are able to diffuse and react with prepolymers. This hardens the foam and biuret condensation can thus be defined as yielding hard crosslink.

Generally speaking, flexible foams can be obtained for example by promoting stages 1 and 2, so that biuret condensation happens only later to fix the cells thus formed. On the other hand, rigid foams can be obtained by e.g., hindering stages 1 and 2, for example with hydrophobic groups, so that the third stage starts earlier and forms a hard structure.

The OCF compositions of the present invention are comparable with any OCF composition on the market in its viscosity, and in that it has a free NCO-groups content in the pressurized vessel of at least 14.5%. It distinguishes itself therefrom, however, *inter alia* in that:
- it has a low content of free monomeric MDI (≤ 4 wt.%, preferably, ≤ 1 wt.%);
- it has undergone no extraction stage of free monomeric MDI;
- it comprises no extra solvent to compensate for the lower amount of free monomeric MDI; furthermore
- the index NCO / OH in the initial blend is of the order of 3.0 to 5.0, preferably 3.1 to 3.4, more preferably 3.2 to 3.3, whilst traditional OCF compositions generally have an index of at least 4.8; and
- it contains no long chains of di-functional alcohols, such as PPG; nor of tri- and higher functional alcohols, to both decrease the viscosity and increase the ratio of free NCO-groups attached to a prepolymer to free monomeric MDI (free MDI ≤ 4 wt.%, and down to ≤ 1 wt.%).

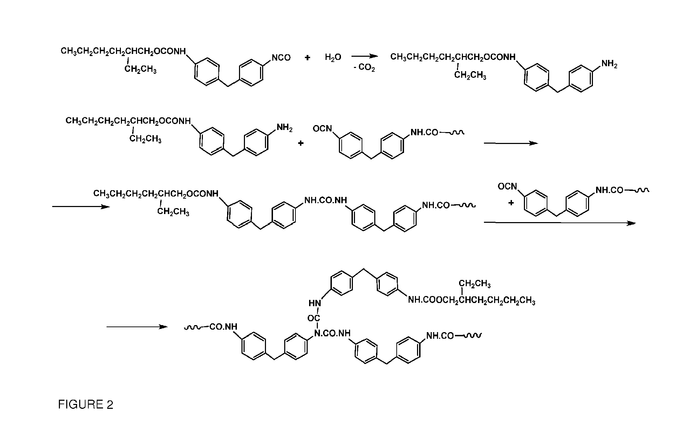

Surprisingly, and contrary to what could be expected, such compositions do not yield foams excessively brittle, by on the one hand, controlling the hydrophilicity / hydrophobicity of the polyols used and, on the other hand, by using a sufficiently long hydrophobic mono-functional alcohol (Mw ≥ 130 g /mol), such as 2-ethyl-hexanol, an ester of vegetal oil containing one secondary hydroxyl group, such as ricinoleic ester, and mixtures thereof. The mono-functional alcohol in the present invention acts to soften the foam. As illustrated in Figure 2 with 2-ethyl-hexanol, the mono-functional alcohol reacts with polyisocyanate (MDI in Figure 2) to form long flexible chains. This applies in particular to stage 3 of the foam polymerization as biuret condensation predominantly occurs with the prepolymers of the mono-functional alcohols, as they are more mobile than three dimensionally crosslinked structures. By controlling the balance between stages 2 and 3, foams with a wide variety of degrees of flexibility / rigidity can thus be designed.

The compositions of the present invention are obtained by mixing and reacting free of moisture polyisocyanates, alcohols, a blowing agent, and additives, to form prepolymers containing free NCO-groups. The polyisocyanates used must have a functionality of at least 2.6 to yield the desired properties of an OCF. A single component may be used, but it is generally preferred to have a mixture of various di-, tri-, and higher functional isocyanates. In particular, the following polyisocyanates may be used: monomeric or crude MDI, crude toluene diisocyanate (crude TDI), poly-phenyl methane poly-isocyanate, (PMDI), isocyanate end-capped TDI prepolymer, preferably tri-functional, and any mixture thereof having a functionality of at least 2.6. MDI is preferably present in an amount such that, after reaction with the alcohols, not more than 4 wt.%, preferably, not more than 1 wt.% free monomeric MDI with respect to the total weight of the mixture, remains unreacted. More preferably, crude MDI is used. In a particularly advantageous embodiment, monomeric or crude MDI is used together with NCO-end capped TDI (toluene diisocyanate).

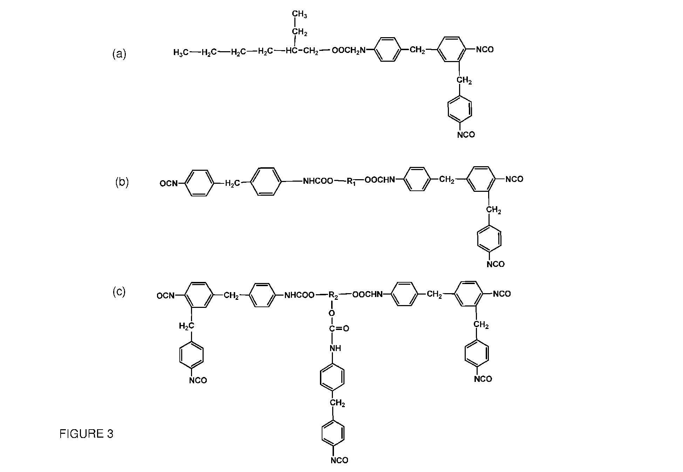

As discussed supra with respect to Figure 2, the monofunctional alcohol of molecular weight of at least 130 g / mol and, more particularly, the prepolymers obtained from the reaction between said alcohol and free NCO, allows to soften the crosslinked net of the OCF, in particular by biuret condensation (stage 3) and thus to control the rigidity of the final foam. A most preferred monofunctional alcohol is 2-ethyl-hexanol, and excellent results were obtained also with esters of vegetal oil containing one secondary hydroxyl group, such as ricinoleic ester. Other monofunctional alcohols may be used alone or admixed with one or the other of the above alcohols. An example of bifunctional NCO-prepolymer obtained from a monofunctional alcohol is illustrated in Figure 3(a).

Whilst the monofunctional alcohol according to the present invention needs be long enough (Mw ≥130 g / mol) to soften the crosslinked net, the polyols must be shorter to yield a higher amount of free NCO-groups attached to a prepolymer, and to reduce the viscosity. The mixture of the present application is obtained by mixing a bi-functional alcohol with the other components. The bi-functional alcohol according to the present invention shall have a molecular weight not exceeding about 100 g / mol. It acts as an extender and permits to control the rigidity of the final foam. Examples of bi-functional alcohols suitable for the present invention are monoethylene glycol (MEG), diethylene glycol (DEG), propylene glycol, 1,3-propylene glycol, 1 ,3-butane diol, 1,4-butane diol, neopentyl glycol, and mixtures thereof. An example of tri-functional NCO prepolymer obtained from reaction of a bi-functional alcohol is illustrated in Figure 3(b).

The tri- or higher functional polyol of molecular weight of not more than 2000, preferably, not more than 1000, suitable for the present invention is selected between
(i) an ester with three or more esterified hydroxy functional fatty acid groups, wherein the closest hydroxyl group on each hydrocarbon chain is separated from the respective ester group by at least seven carbons; and
(ii) a hydroxy functional polyether oligomer having an overall hydroxy functionality comprised between 3 and 8.

Here again the molecular weight of the tri- or higher functional alcohol is limited to not more than 2000, preferably not more than 1000 g / mol. It may be a polyester or a polyether. Particularly preferred esters with three or more esterified hydroxy functional fatty acid groups are esters of ricinoleic acid, avenoleic acid, strophantus acid, lesquerolic acid, 14-hydroxy-11-eicosenoic acid, densipolic acid, and auricolic acid. A most preferred ester is ricin oil. Preferred polyether oligomers are hydroxyl polyoxypropylene glycerides, such as tris-[hydroxy-tetra (1,2 oxypropylenyl)-1,2 propyl] glyceryl ether, or tris-[hydroxy-penta (1,2 oxypropylenyl)-1,2 propyl] glyceryl ether.

The functional polyether oligomers suitable for the present invention preferably have flexible chains. The flexibility of a chain expresses the ease of mutual free rotation of atoms forming the skeleton of a chain with respect to the neighbouring atoms of the chain, wherein the rotation axes, angles, and amplitude depend on the valences of the neighbouring atoms, on the bonds lengths, steric effects, and the like. The flexibility of polyether polyols' chains may differ substantially depending on their nature. Ethylene oxide type polyether polyols have rather flexible chains, with short and easily movable segments, resulting in a high propensity to crystallize. On the other hand, propylene oxide type have somewhat "harder" chains, with longer segments which are more difficult to move; these chains are more difficult to crystallize than the former. In the context of the present invention, a polyether oligomer with "flexible" chain is therefore meant to refer to a substantially linear chain, comprising few stiffening elements such as unsaturated double bonds, bulky groups like phenolic rings, and the like.

An example of composition in polyisocyanate and alcohols of a mixture according to the present invention comprises:
(a) between 1 5 and 25 wt% of MDI or PMDI prepolymers and 50 to 75 wt% isocyanate-end capped TDI
(b) between 5 and 15 5 wt% of a mono-functional alcohol, preferably 2-ethyl-hexanol, more preferably between 8 and 12 wt%, most preferably between 9.5 and 10.5 wt%;
(c) between 1 and 1 5 wt% of a bi-functional alcohol, preferably ethylene glycol, more preferably between 2 and 8 wt%;
(d) between 8 and 20 wt% of castor oil, preferably between 10 and 15 wt%, more preferably between 10.5 and 12.0 wt%
all weight fractions being calculated with respect to the total weight of the mixture.

In a preferred embodiment, the weight ratio of the mono-functional alcohol, preferably 2-ethyl-hexanol, to castor oil is greater than 25%, preferably greater than 30%, more preferably greater than 45%, most preferably greater than 70%. If 2-ethyl-hexanol is used, its weight ratio to the total weight of polyols is preferably greater than 20%, more preferably greater than 24%, most preferably greater than 30%.

At an early stage of the reaction, the prepolymers obtained by reaction of NCO-groups with bi-, tri-, and higher functionality alcohols will react and form at stage 2 a rather dense crosslinking network due to the short chains of the prepolymers. This early fixing of the prepolymers obtained from polyols excludes them from participating actively to biuret crosslinking other than as targets. Only the low molecular weight prepolymers may diffuse and react by biuret condensation, so that the prepolymers of monofunctional alcohols, with their higher mobility, will predominantly participate in stage 3 of the crosslinking. With their substantially linear structure, the latter prepolymers confer a certain flexibility to the foam during the biuret condensation, which is contrary to what is observed with traditional foam compositions. The degree of flexibility can further be controlled by dosing appropriately the amount of di-isocyanate which will yield by reaction with monofunctional alcohols, monofunctional NCO prepolymers.which limit the degree of branching occurring with biuret condensation. It can be seen that by controlling the kinetics of stages 2 and 3 of the foam crosslinking reaction, as well as by the choice of components and their amounts, the properties of the foams thus obtained can be varied over a wide extent. This is highly advantageous, because the compositions of the present invention do not need to contain any polyol of molecular weight higher than 2000 g / mol, or even higher than 1000 g/mol, such as PPG to soften the foam, such polyols having the drawback of concomitantly, substantially increasing the viscosity of the mixture.

Since one of the objectives of the present invention is to substantially reduce the content of free monomeric MDI remaining unreacted with the alcohols, the raw materials are so dosed as to yield a NCO/OH ratio comprised between 2.6 and 5.0, preferably between 2.6 and 4.0, more preferably between 2.9 and 3.5, which is generally lower than most traditional OCF compositions with NCO/OH ratios higher than 4.8.

Any blowing agent known in the art can be used in the present invention, provided it is compatible with the NCO-prepolymers, which is the case of all the traditional blowing agents tested to date. Particularly preferred blowing agents are propane, butane, i-butane, dimethyl ether (DME), carbon dioxide (CO₂), and mixtures thereof, and are preferably present in an amount of 50 to 70 vol.%, more preferably 55 to 65 vol.%.

A catalyst is used and any catalyst traditionally used in OCF compositions may be used here. Besides the traditional tin based catalysts (e.g., stannous octoate), excellent results were obtained with Lewis bases or acids, dimethyl aminoethoxyethanol (DMEE), di-morpholino diethyl ether (DMDEE), or mixtures thereof. In most applications, a flame retardant is required, which can be selected from the group of: monochlorinated mono-methyl ester of castor oil, or (1-chlor-2-propyl) phosphate (TCPP). A surfactant and/or cell structure regulator may also be used, such as silicone surfactants or paraffin. Any filler, pigment, or dye.may be used and the compositions of the present invention are not restricted thereto.

The compositions of the present invention may be prepared by a process as defined in the appended claims. In particular, the various components may be loaded in a mixer and mixed at an elevated temperature of 45 to 95°C, preferably of 50 to 65°C for a given time of about 20 to 120 min, preferably 30 to 60 min, appropriate amounts of polyisocyanate, mono-functional alcohol, bi-functional alcohol, tri- and higher functional alcohols, a catalyst and other additives as described supra. If several polyisocyanates are used, it may be advantageous to prepare separately prepolymer blends with each type of polyisocyanate with the specific polyols, or specific amounts of polyols, it is desired to react them with. This way, it is possible to better control the composition of the NCO-prepolymers thus prepared.

Once the components have reacted to form the desired NCO-prepolymers, the mixture can be transferred into a separate vessel. It is also possible to prepare the blend in the final vessel, in which case this transfer is of course not necessary. The vessel containing the mixture is then closed hermetically, taking care to never contact the mixture with moisture. A blowing agent, serving also as propellent gas is then introduced under pressure into the closed vessel trough a valve. The pressurized vessel is preferably a spraying can, allowing the prepolymer mixture to be simply sprayed onto the target position, and the composition will react with ambient moisture to form a polyurethane foam as described supra.

### EXAMPLES

Examples 1 and 2 are embodiments of OCF compositions according to the present invention yielding less than 1 wt.% free monomeric MDI. Examples 1 and 2, which compositions are listed in Table 1, were each obtained by separately preparing a MDI prepolymer blend and a TDI prepolymer blend, followed by mixing these two blends with the other components as follows.

**Table 1: OCF compositions according to the present invention**

| **type** | **raw materials** | **Ex 1** | **Ex2** |
|---|---|---|---|
| NCO | crude MDI-Suprasec 5025 | 42,5% | 42,5% |
| NCO | crude TDI (80/20) | 14,0% | 13,9% |
| Mono-OH | 2-Ethyl-hexanol | 9,3% | 9,3% |
| BI-OH | ethylene glycol | 2,8% | 2,8% |
| Tri-OH | castor oil | 8,2% | 13,1% |
| Tri-OH | GP1000 | 4,8% | |
| surfactant | tegostab B8870 | 3,3% | 3,3% |
| flame retard. | TCPP | 14,7% | 14,7% |
| catalyst | DEMEE | 0,4% | 0,4% |
| blowing agent | propane/i-butane/dimethyl ether | * | * |
| | | 100% | 100% |

| | | | |
|---|---|---|---|
| * Blowing agent present as 60 vol.% and composed of 7 wt.% propane, 63 wt.% i-butane, and 30 wt.% dimethyl ether, | | | |

The MDI prepolymer blends of Examples 1 and 2 were obtained by mixing crude MDI (Suprasec 5025 of the company Huntsman), 2-ethyl hexanol, ethylene glycol, castor oil, and TCPP in a closed hermetic mixer for about 90 min at a temperature of 50°C: The TDI prepolymers of Examples 1 and 2 were prepared by mixing in a closed hermetic mixer at 90°C for about 90 min, crude TDI (80/20), 2-ethyl hexanol, ethylene glycol, castor oil, and TCPP; in Example 1, GP1000, a glycerol propoxylate having an average molecular weight of about 1000 available from Sigma-Aldrich, was added too. The two prepolymer blends of each Example were mixed together with a catalyst (DEMEE) and a surfactant (Tegostab B8870 of the company Degussa) to obtain the weight fractions indicated in Table 1.The thus obtained blend was discharged into a container, sheltered from moisture, the container was hermetically closed and the blowing agent was injected into the closed container through a valve.

The separate preparation of a MDI and a TDI prepolymer blends is not mandatory and all the components may be mixed together. This solution, however, is advantageous as it allows a better control of the types and proportions of NCO-prepolymers thus obtained.

## Claims

1. One component isocyanate prepolymer mixture for the production of polyurethane foam said mixture having a content of free monomeric diphenylmethane diisocyanate (MDI) of not more than 4 wt%, with respect to the total weight of the mixture, and being obtained by mixing in the absence of moisture at least;
(a) an isocyanate component, or mixture of components, having a functionality of at least 2.6, preferably comprising MDI
(b) a mono-functional alcohol having a molecular weight of at least about 130 g / mol, preferably having a branched paraffinic structure for controlling the flexibility of the final foam ;
(c) a bi-functional alcohol having a molecular weight not greater than about 100 g / mol for controlling the final foam rigidity;
(d) a tri- or higher functional polyol of molecular weight of not more than 2000, preferably, not more than 1000, selected between
(i) an ester with three or more esterified hydroxy functional fatty acid groups, wherein the closest hydroxyl group on each hydrocarbon chain is separated from the respective ester group by at least seven carbons; and
(ii) a hydroxy functional polyether oligomer having an overall hydroxy functionality comprised between 3 and 8;
(e) a catalyst and additives; and
(f) a blowing agent.

2. A mixture according to claim 1, wherein the content of free monomeric MDI is not more than 3 wt%, with respect to the total weight, preferably not more than 2 wt.%, more preferably not more than 1 wt%.

3. A mixture according to claim 1 or 2, wherein the isocyanate component or mixture of components comprises one or more of the following components: crude MDI, crude toluene diisocyanate (crude TDI), poly-phenyl methane poly-isocyanate, (PMDI), isocyanate end-capped TDI prepolymer, preferably tri-functional, and any mixture thereof having a functionality of at least 2.6.

4. A mixture according to claims 2 and 3, wherein the content of free monomeric MDI is not more than 1 wt%, and wherein it comprises at least isocyanate end-capped TDI prepolymer.

5. A mixture according to any of the preceding claims, wherein the monofunctional alcohol is selected from the group of: 2-ethyl-hexanol, ester of vegetal oil containing one secondary hydroxyl group, such as ricinoleic ester, and mixtures thereof.

6. A mixture according to any of the preceding claims, wherein the bi-functional alcohol is selected from the group of: monoethylene glycol (MEG), diethylene glycol (DEG), propylene glycol, 1,3-propylene glycol, 1,3-butane diol, 1,4-butane diol, neopentyl glycol, and mixtures thereof, and wherein said mixture preferably does not contain any polypropylene glycol (PPG).

7. A mixture according to any of the preceding claims, wherein the esterified hydroxy functional fatty acid chains of the tri- or higher functional polyol are selected from the group of: ricinoleic acid, avenoleic acid, strophantus acid, lesquerolic acid, 14-hydroxy-11-eicosenoic acid, densipolic acid, and auricolic acid.

8. A mixture according to any of the preceding claims, wherein the tri-or higher hydroxy functional polyol polyether oligomer is a poly (hydroxy poly-alkyloxy alkyl) etherified polyol.

9. A mixture according to any of the preceding claims, wherein the blowing agent is selected from the group of propane, butane, i-butane, dimethyl ether (DME), carbon dioxide (CO₂), and mixtures thereof and is preferably present in an amount of 50 to 70 vol%, more preferably 55 to 65 vol%.

10. A mixture according to any of the preceding claims, comprising as additive a flame retardant selected from the group of: monochlorinated mono-methyl ester of castor oil, or (1-chlor-2-propyl) phosphate (TCPP), and a catalyst selected from: the group of Lewis bases or acids, dimethyl aminoethoxyethanol (DMEE), di-morpholino diethyl ether (DMDEE), or mixtures thereof.

11. A mixture according to any of the preceding claims, further comprising a surfactant and/or cell structure regulator, preferably silicone surfactants or paraffin, and may optionally comprise a filler, a pigment, or dye.

12. A mixture according to any of the preceding claims, wherein the NCO/OH ratio in the initial blend is between 2.6 and 5.0, preferably between 2.6 and 4.0, more preferably between 2.9 and 3.5.

13. Mixture according to any of the preceding claims, comprising:
(a) between 1 5 and 25 wt% of MDI or PMDI prepolymers and 50 to 75 wt% isocyanate-end capped TDI
(b) between 5 and 15 wt% of a mono-functional alcohol, preferably 2-ethyl-hexanol, more preferably between 8 and 12 wt%, most preferably between 9.5 and 10.5 wt%;
(c) between 1 and 15 wt% of a bi-functional alcohol, preferably ethylene glycol, more preferably between 2 and 8 wt%;
(d) between 8 and 20 wt% of castor oil, preferably between 10 and 15 wt%, more preferably between 10.5 and 12.0 wt%
all weight fractions being calculated with respect to the total weight of the mixture.

14. Method for preparing a one component isocyanate prepolymer mixture for the production of polyurethane, said mixture having a content of free monomeric diphenylmethane diisocyanate (MDI) of not more than 4wt.% with respect to the total weight, said method comprising the following steps:
(A) load in a closed, hermetic vessel protected from moisture and mix at a temperature comprised between 45 and 95°C, preferably between 50 and 65°C appropriate amounts of a mixture comprising:
(a) an isocyanate component, or mixture of components, having a functionality of at least 2.6, preferably comprising MDI
(b) a mono-functional alcohol having a molecular weight of at least about 130 g / mol, preferably having a branched paraffinic structure for controlling the flexibility of the final foam ;
(c) a bi-functional alcohol having a molecular weight not greater than about 100 g / mol for controlling the final foam rigidity;
(d) a tri- or higher functional polyol of molecular weight of not more than 2000, preferably, not more than 1000, selected between
(iii) an ester with three or more esterified hydroxy functional fatty acid groups, wherein the closest hydroxyl group on each hydrocarbon chain is separated from the respective ester group by at least seven carbons; and
(i) a hydroxy functional polyether oligomer having an overall hydroxy functionality comprised between 3 and 8;and
(e) a catalyst and additives;
(B) optionally transfer the mixture thus obtained into a dispensing container, shielding the blend from moisture; and
(C) hermetically close the vessel or dispensing container containing the mixture and introduce therein a blowing agent under pressure through a valve.

15. Method according to the preceding claim, wherein the mixture in step (C) is according to any of claims 1 to 13.
